# FASCICULE DE BREVET EUROPEEN

(11) **EP 1 936 227 B1**
(45) Date de publication et mention de la délivrance du brevet: **15.02.2012**
(21) Numéro de dépôt: 07122451.3
(22) Date de dépôt: 06.12.2007
(51) Int. Cl.: F16D 65/14

(54) **Procédé d'assemblage d'un dispositif de freinage et dispositif de freinage assemblé selon un tel procédé**
Montageverfahren einer Bremsvorrichtung und Bremsvorrichtung, die nach einem solchen Verfahren zusammengebaut wird
Method for assembling a braking device and braking device assembled according to such a method

(30) Priorité: 20.12.2006 FR 0611168
(43) Date de publication de la demande: 25.06.2008
(73) Titulaire: ROBERT BOSCH GMBH, 70442 Stuttgart (DE)
(72) Inventeur: Gosse, William, 49250 Fontaine-Guerin (FR); Marchitelli, Gianfranco, 75020 Marconia (IT); Tristano, Nicola, 75016 Paris (FR)
(74) Mandataire: Hurwic, Aleksander Wiktor

(56) Documents cités:
- DE-A1- 4 417 741
- FR-A1- 2 741 412
- GB-A- 2 178 808

## Description

La présente invention concerne un procédé d'assemblage d'un dispositif de freinage pour véhicule automobile ainsi qu'un dispositif de freinage assemblé selon un tel procédé.

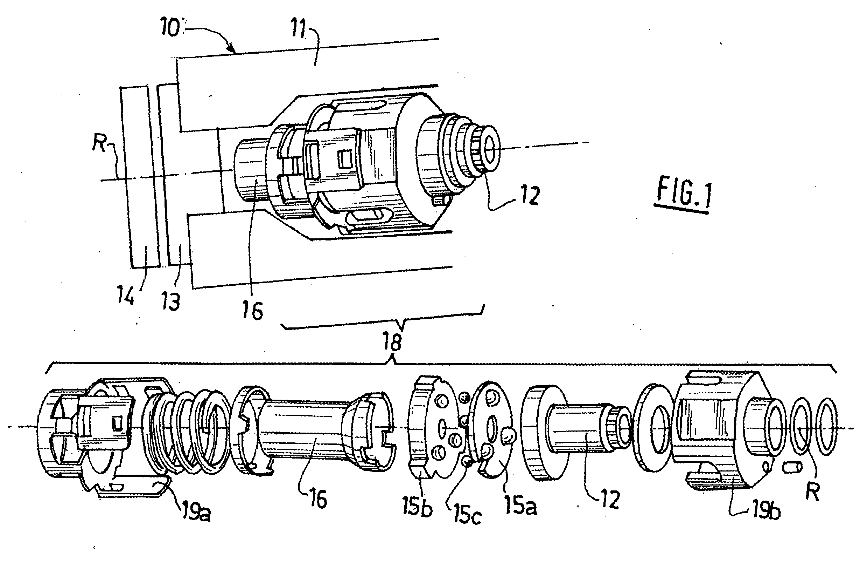

Un dispositif 10 (figure 1) de freinage pour véhicule automobile peut comprendre un cylindre 11 dans lequel pivote un arbre 12 de commande destiné à déplacer un piston 16 d'actionnement agissant, par coulissement, sur un patin 13 afin de bloquer un frein à disque 14 à l'aide d'un second patin - non représenté - comme décrit en détail ultérieurement.

En bloquant ainsi ce frein à disque 14, le dispositif de freinage 10 bloque également la roue du véhicule - non représentée - associée à ce frein à disque de façon à mettre en oeuvre un freinage de stationnement.

A cet effet, il est connu de munir le dispositif 10 avec notamment un premier plateau rotatif 15a, solidaire de l'arbre de commande 12 en rotation selon l'axe R de ce dernier, et d'un second plateau 15b coulissant selon cet axe R, fixe en rotation, des billes 15c de roulement étant maintenues prisonnières dans des logements en rampe creusés en vis-à-vis dans ces plateaux 15a et 15b.

Ces différents éléments, et d'autres éléments représentés sur la figure 1, sont assemblés dans une cartouche 18 formée par une cage 19a et une douille 19b, la cage 19a présentant une ouverture dans laquelle coulisse le piston 16 d'actionnement tandis que la douille 19b présente une ouverture dans laquelle pivote l'arbre 12 de commande.

Les procédés actuels d'assemblage des dispositifs de freinage comprenant une telle cartouche 18 présentent l'inconvénient de requérir l'assemblage total ou partiel de la cartouche dans son cylindre 11 dédié. Or une telle opération s'avère difficile et compliquée, notamment compte tenu de la contrainte qu'impose l'assemblage précis de pièces mécaniques dans l'espace restreint du cylindre.

Le document DE 44 17 741 A1 montre un dispositif de freinage comprenant une cartouche formée par l'assemblage d'une douille avec une cage.

La présente invention vise à résoudre ce problème. C'est pourquoi, elle concerne un procédé d'assemblage d'une cartouche dans un cylindre pour former un dispositif de freinage, cette cartouche étant formée par l'assemblage d'une douille avec une cage, caractérisé en ce que, la cage étant munie d'ailettes, il comprend les étapes suivantes :
- l'étape de maintenir précontraint un élément flexible logé dans ces ailettes,
- L'étape d'introduire la cartouche dans le cylindre et de maintenir cette cartouche dans une position de fonctionnement, et
- L'étape de déloger l'élément flexible des ailettes afin de permettre son extension jusqu'à ce que cet élément flexible vienne en contact avec le cylindre et bloque ainsi des déplacements de la cartouche dans le cylindre.

Un tel procédé présente l'avantage de permettre un assemblage de la cartouche à l'extérieur du cylindre, ce qui améliore les conditions d'assemblage de cette cartouche puisqu'un tel assemblage n'est plus effectué dans l'espace limité et contraignant d'un cylindre.

De plus, l'assemblage ultérieur de la cartouche dans le cylindre est simple et rapide, ce qui accroît les cadences d'assemblage et réduit les coûts d'assemblage.

Dans une réalisation, le procédé comprend l'étape d'utiliser au moins une butée, une rainure ou un logement situé sur une paroi du cylindre pour venir au contact de l'élément flexible après l'introduction de la cartouche dans le cylindre, ce contact permettant ainsi de bloquer les déplacement de l'élément flexible dans le cylindre et/ou de guider la cartouche lors de son introduction dans le cylindre.

Selon une réalisation, le procédé comprend l'étape de maintenir l'élément flexible en contact avec la cage de la cartouche simultanément au contact de l'élément flexible avec le cylindre de telle sorte que l'élément flexible, délogé des ailettes, reste en contact avec la cage.

Dans une réalisation, la cartouche comprenant un ressort de précontrainte, le procédé comprend l'étape de maintenir le ressort précontraint pendant que s'effectue l'extension de l'élément flexible de telle sorte que la cartouche est bloquée dans le cylindre dans une position de fonctionnement.

Selon une réalisation, le procédé comprend l'étape de maintenir le ressort précontraint en utilisant un premier outil coaxial, venant au contact de la cartouche, et d'utiliser un second outil coaxial pour déloger l'élément flexible, ces outils permettant l'introduction et le blocage de la cartouche dans le cylindre.

L'invention concerne également un dispositif de freinage avec les caractéristiques de la revendication 6.

L'invention concerne aussi une cartouche avec les caractéristiques de la revendication 7.

Dans une réalisation, la cartouche est caractérisée en ce que l'élément flexible est logé dans les ailettes de la cage.

Finalement, l'invention concerne un cylindre avec les caractéristiques de la revendication 9.

Selon une réalisation, le cylindre comprend des moyens pour guider le positionnement de la cartouche dans son logement.

D'autres caractéristiques et avantages de l'invention apparaîtront à la lumière de la description d'une réalisation de l'invention effectuée ci-dessous, à titre illustratif et non limitatif, en faisant référence aux figures ci-jointes sur lesquelles :
- la figure 1, déjà décrite, représente une cartouche de frein conforme à l'art antérieur,
- la figure 2 est un schéma d'un dispositif de freinage conforme à l'invention,
- les figures 3a et 3b représentent l'assemblage d'une cartouche conformément à l'invention, et
- les figures 4a, 4b, 4c représentent l'assemblage d'un dispositif de freinage conformément à l'invention.

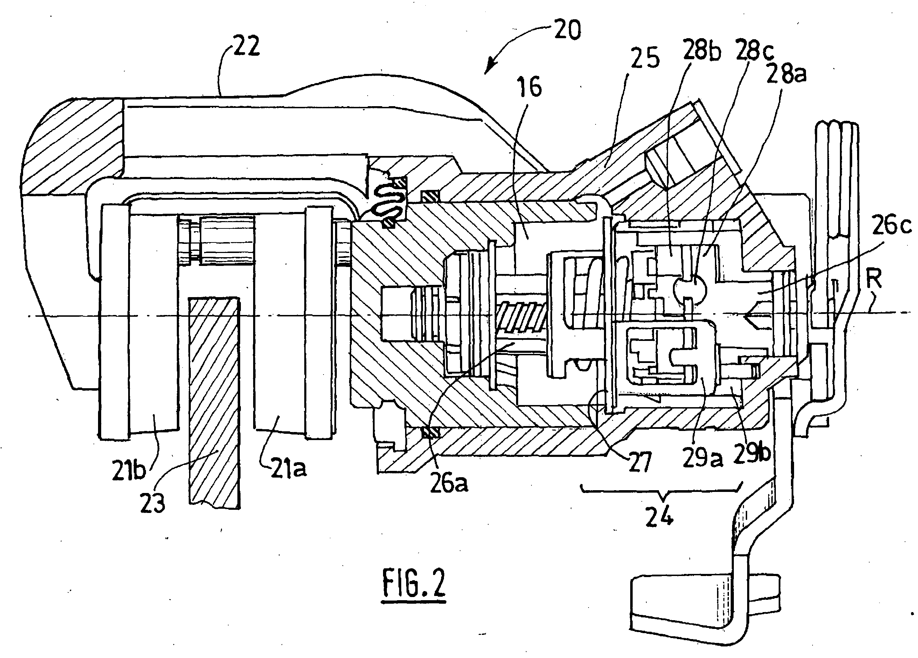

Comme montré sur la figure 2, un dispositif 20 de freinage conforme à l'invention est classiquement muni de plaquettes 21a et 21b de frein mises en oeuvre à l'aide d'un étrier flottant 22, cet étrier flottant 22 étant disposé par rapport à un disque 23 de frein de telle sorte que la plaquette 21a de frein puisse être déplacée contre ce disque de frein 23.

Une telle application produit des forces de réaction qui déplacent l'étrier flottant 22 jusqu'à ce que la deuxième plaquette de frein 21b vienne également au contact du disque 23 de frein, les plaquettes 21a et 21b bloquant ainsi ce dernier conformément à l'action d'un frein de stationnement.

Pour commander le déplacement de la plaquette 21a, le dispositif 20 de freinage comprend une cartouche 24 située dans un cylindre 25, cette cartouche 24 transformant le pivotement, autour d'un axe R, d'un arbre 26c de commande en un mouvement de translation, selon cet axe R, d'un piston 26a d'actionnement fournissant la poussée nécessaire au déplacement de la plaquette de frein 21a.

Cette transformation est notamment obtenue par l'intermédiaire de plateaux 28a et 28b en vis-à-vis et de billes 28c de roulement prisonnières dans des logements en rampe creusés en vis-à-vis dans les plateaux respectifs.

Ces différents éléments, et notamment les plateaux et les billes de roulement, sont maintenus à l'intérieur de la cage 29a ou de la douille 29b qui forment la cartouche 24.

Cette cartouche 24 est assemblée au cylindre 25 selon un procédé conforme à l'invention. Ainsi, un élément flexible 27 solidaire de la cartouche 24 est maintenu contraint en compression dans le cylindre 25, cette contrainte en compression dans le cylindre 25 bloquant ainsi la cartouche dans le cylindre comme décrit ci-dessous à l'aide d'une réalisation où l'élément flexible 27 est un clip, ou collier, flexible.

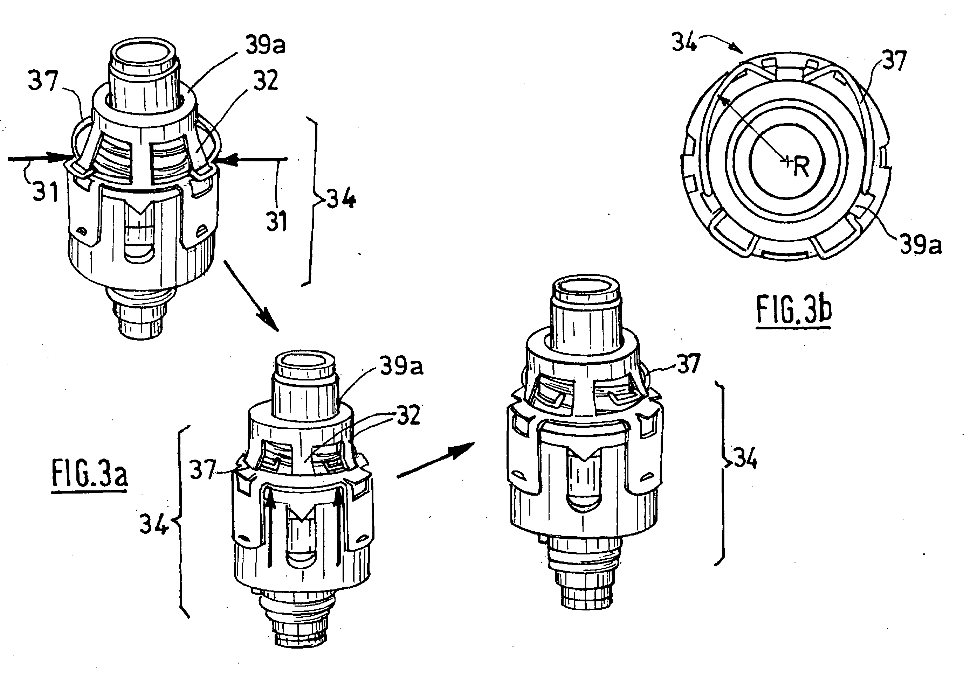

La figure 3a décrit l'assemblage d'un tel clip flexible 37 à une cartouche 34. Pour cela, trois étapes décrites sont représentées:
- Dans une première étape, le clip flexible 37 subit une première précontrainte 31, représentée par des flèches, en compression. Cette première contrainte est effectuée pour diminuer les dimensions du clip 37 jusqu' à ce que la mise en oeuvre de la seconde étape puisse être effectuée.
- Dans une seconde étape, on glisse le clip 37 précontraint à l'intérieur d'un logement formé par des extrémités, dénommées ailettes 32 par la suite, de la cage 39a.
- Dans une troisième étape, on déplace le clip 37 à l'intérieur de la cage 39a afin que, en relâchant partiellement la précontrainte subie par le clip, ce dernier se maintienne contre ces ailettes 32 dans la cage 39a.

Le résultat ainsi atteint est également illustré sur la figure 3b qui est une vue en hauteur de la cartouche 34. Grâce à une telle illustration, il apparaît clairement que le clip 37 a des dimensions, par rapport à l'axe R de la cartouche, inférieures ou égales aux dimensions de cette cartouche.

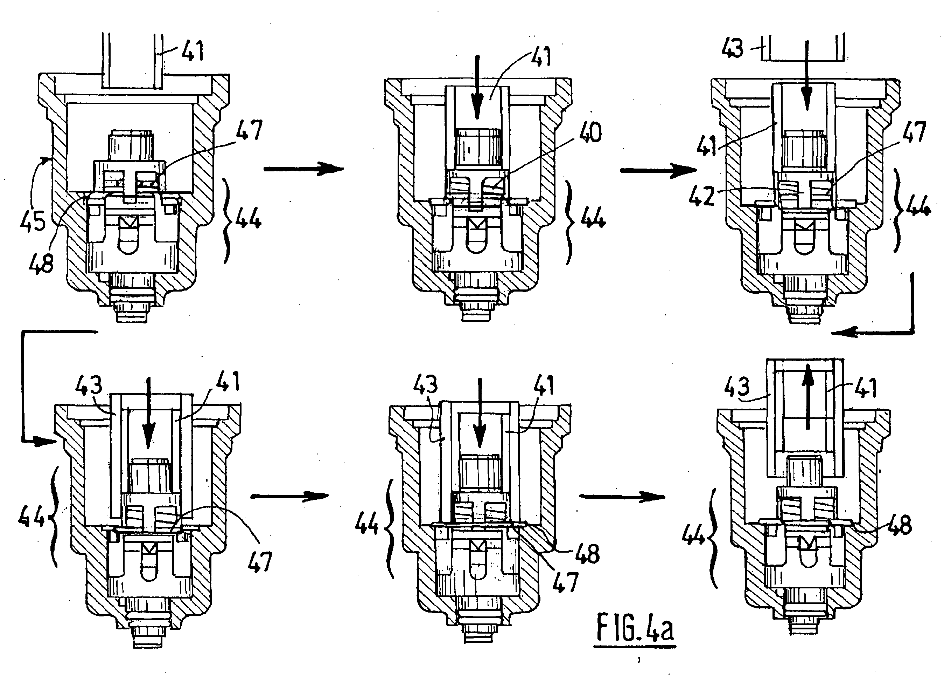

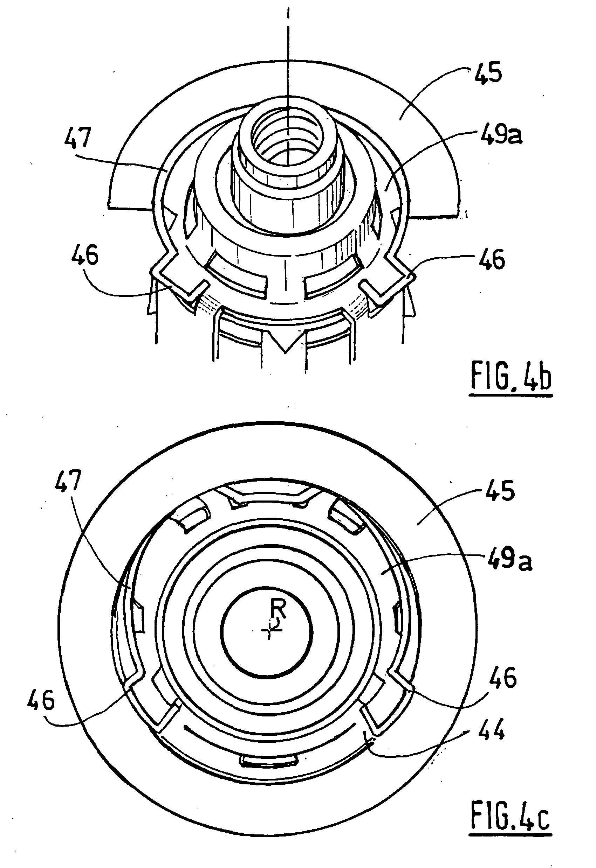

Ainsi, le clip 37 ne limite pas l'introduction de la cartouche 34, déjà assemblée, dans son cylindre dédié, comme décrit ci-dessous à l'aide des figures 4a, 4b et 4c.

Sur la figure 4a sont représentées différentes étapes de l'assemblage d'une cartouche 44, munie d'un clip 47 flexible et précontraint, dans un cylindre 45 dédié.

Dans cette réalisation, le cylindre 45 comprend des rainures ou des nervures 48 contre lesquelles vient s'appuyer le clip 47, cet appui étant maintenu par le ressort précontraint de la cartouche.

Pour cela, dans un premier temps, la cartouche 44 est introduite dans le cylindre 45 puis, dans un second temps, un outil 41 ayant une forme adaptée, par exemple coaxiale, vient en appui sur l'intérieur de la cage 49a, notamment pour mettre en situation de précontrainte un ressort 40 et placer la cartouche 44 dans la position de fonctionnement où elle doit être maintenue.

Pour obtenir ce maintien, dans un troisième temps, un second outil 43 vient appuyer sur le clip 47 de façon à déplacer ce dernier le long des ailettes 42 jusqu'à ce que, dans une dernière étape, le clip soit libéré vis-à-vis de ces ailettes 42.

A cet instant, étant libéré de la contrainte exercée par les ailettes 42, le clip 47 peut s'étendre dans le cylindre 45.

Toutefois, comme précédemment indiqué, le clip 47 présente une forme, par exemple de collier muni de crochets ou saillies, telle que son extension dans le cylindre 45 a pour effet de maintenir une partie de ce clip 47 en contact avec le cylindre 45 - ce contact limitant son extension - tandis qu'une autre partie du clip 47 est en contact avec la cartouche 44 - ce contact bloquant les déplacements de la cartouche.

Les figures 4b et 4c illustrent cette situation avec, respectivement, une vue en perspective et une vue en hauteur de l'assemblage ainsi obtenu.

Il apparaît ainsi clairement que des saillies 46 du clip 47 maintiennent le contact avec la cage 49a à l'égard desquelles ces saillies apparaissent comme des butées bloquant un déplacement de la cartouche selon cet axe R.

Il convient de noter que l'assemblage de la cartouche 44 dans le cylindre 45 peut être effectué à l'aide de moyens de guidage, tels que des rainures ou des butées, qui permettent d'orienter le placement d'une cartouche dans le cylindre.

## Revendications

1. Procédé d'assemblage d'une cartouche (24, 34, 44) dans un cylindre (25, 45) pour former un dispositif (20) de freinage, cette cartouche (24, 34, 44) étant formée par l'assemblage d'une douille (29b) avec une cage (29a, 39a, 49a), **caractérisé en ce que**, la cage (29a, 39a, 49a) étant munie d'ailettes (32), il comprend les étapes suivantes :
- l'étape de maintenir précontraint un élément flexible (27, 37, 47) logé dans ces ailettes,
- L'étape d'introduire la cartouche (24, 34, 44) dans le cylindre (25, 45) et de maintenir cette cartouche (24, 34, 44) dans une position de fonctionnement, et
- L'étape de déloger l'élément flexible (27, 37, 47) des ailettes (32) afin de permettre son extension jusqu'à ce que cet élément flexible (27, 37, 47) vienne en contact avec le cylindre (25, 45) et bloque ainsi des déplacements de la cartouche (24, 34, 44) dans ce cylindre (25, 45).

2. Procédé selon la revendication précédente **caractérisé en ce qu'**il comprend l'étape d'utiliser au moins une butée, une rainure (48) ou un logement situé sur une paroi du cylindre (45) pour venir au contact de l'élément flexible (47) après l'introduction de la cartouche (44) dans le cylindre (45).

3. Procédé selon l'une des revendications 1 ou 2 **caractérisé en ce qu'**il comprend l'étape de maintenir l'élément flexible (27, 37, 47) en contact avec la cage (29a, 39a, 49a) de la cartouche (24, 34, 44) simultanément au contact de l'élément flexible (27, 37, 47) avec le cylindre (25, 45).

4. Procédé selon l'une des revendications 1 à 3 **caractérisé en ce que**, la cartouche (24, 34, 44) comprenant un ressort de précontrainte, il comprend l'étape de maintenir le ressort précontraint pendant que s'effectue l'extension de l'élément flexible (27, 37, 47).

5. Procédé selon la revendication 4 comprenant l'étape de maintenir le ressort précontraint en utilisant un premier outil coaxial (41), venant au contact de la cartouche (44), et un second outil (43) également coaxial pour déloger l'élément flexible (47) des ailettes.

6. Dispositif (20) de freinage comprenant une cartouche (24) logée dans un cylindre (25) comportant des plateaux (28a, 28b) en vis-à-vis et de billes (28c) de roulement prisonnières dans des logements en rampe creusés en vis-à-vis dans les plateaux respectifs,
**caractérisé en ce que** la cartouche (24) comporte une cage munie d'ailettes, **en ce que** ladite cartouche est bloquée dans le cylindre (25) à l'aide d'un élément flexible (27) aménagé dans le cylindre conformément à un procédé mis en oeuvre selon l'une des revendications précédentes.

7. Cartouche (24, 34, 44) destinée à être assemblée dans un cylindre pour former un dispositif de freinage comportant des plateaux (28a, 28b) en vis-à-vis et de billes (28c) de roulement prisonnières dans des logements en rampe creusés en vis-à-vis dans les plateaux respectifs,
**caractérisée en ce qu'**elle comporte une cage munie d'ailettes, **en ce que** ladite cartouche est munie d'un élément flexible (27, 37, 47) précontraint pour mettre en oeuvre un procédé conforme à l'une des revendications 1 à 5.

8. Cartouche selon la revendication 7 **caractérisée en ce que** l'élément flexible (37) est logé dans ledites ailettes (32).

9. Cylindre (25, 45) comportant une cartouche (24, 44) pour former un dispositif de freinage comportant des plateaux (28a, 28b) en vis-à-vis et de billes (28c) de roulement prisonnières dans des logements en rampe creusés en vis-à-vis dans les plateaux respectifs,
**caractérisé en ce qu'**il présente au moins une butée ou une rainure (48) destiné à mettre en oeuvre un procédé conforme à l'une des revendications 1 à 6.

10. Cylindre selon la revendication 9 **caractérisé en ce qu'**il comprend des moyens pour guider le positionnement de la cartouche dans son logement.

## Claims

1. Method of assembling a cartridge (24, 34, 44) in a cylinder (25, 45) to form a braking device (20), this cartridge (24, 34, 44) being formed of an assembly of a sleeve (29b) with a cage (29a, 39a, 49a), **characterized in that**, with the cage (29a, 39a, 49a) having fins (32), this method comprises the following steps:
- the step of maintaining a preload on a flexible element (27, 37, 47) housed in these fins,
- the step of introducing the cartridge (24, 34, 44) into the cylinder (25, 45) and of holding this cartridge (24, 34, 44) in an operating position, and
- the step of dislodging the flexible elements (27, 37, 47) from the fins (32) to allow it to extend until this flexible element (27, 37, 47) comes into contact with the cylinder (25, 45) and thus prevents the cartridge (24, 34, 44) for moving inside this cylinder (25, 45).

2. Method according to the preceding claim, **characterized in that** it comprises the step of using at least one end stop, groove (48) or housing located on one wall of the cylinder (45) to come into contact with the flexible element (47) after the cartridge (44) has been introduced into the cylinder (45).

3. Method according to either of Claims 1 and 2, **characterized in that** it comprises the step of holding the flexible element (27, 37, 47) in contact with the cage (29a, 39a, 49a) of the cartridge (24, 34, 44) at the same time as holding the flexible element (27, 37, 47) in contact with the cylinder (25, 45).

4. Method according to one of Claims 1 to 3, **characterized in that**, with the cartridge (24, 34, 44) comprising a preloading spring, this method comprises the step of keeping the spring preloaded while the flexible element (27, 37, 47) is extending.

5. Method according to Claim 4 comprising the step of keeping the spring preloaded using a first coaxial tool (41) that comes into contact with the cartridge (44) and a second tool (43), which is likewise coaxial, for dislodging the flexible element (47) from the fins.

6. Braking device (20) comprising a cartridge (24) housed in a cylinder (25) comprising opposing plates (28a, 28b) and rolling balls (28c) held captive in opposing ramped housings hollowed into the respective plates,
**characterized in that** the cartridge (24) comprises a cage fitted with fins, **in that** the said cartridge is blocked in the cylinder (25) using a flexible element (27) formed in the cylinder according to a method carried out according to one of the preceding claims.

7. Cartridge (24, 34, 44) intended to be assembled in a cylinder to form a braking device comprising opposing plates (28a, 28b) and rolling balls (28c) held captive in opposing ramped housings hollowed into the respective plates,
**characterized in that** it comprises a cage fitted with fins, **in that** the said cartridge is fitted with a preloaded flexible element (27, 37, 47) for implementing a method according to one of Claims 1 to 5.

8. Cartridge according to Claim 7, **characterized in that** the flexible element (37) is lodged in the said fins (32).

9. Cylinder (25, 45) comprising a cartridge (24, 44) to form a braking device comprising opposing plates (28a, 28b) and rolling balls (28c) held captive in opposing ramped housings hollowed into the respective plates,
**characterized in that** it has at least one end stop or groove (48) intended for implementing a method according to one of Claims 1 to 6.

10. Cylinder according to Claim 9, **characterized in that** it comprises means for guiding the positioning of the cartridge in its housing.

## Patentansprüche

1. Verfahren zum Einbau einer Patrone (24, 34, 44) in einen Zylinder (25, 45), um eine Bremsvorrichtung (20) zu bilden, wobei diese Patrone (24, 34, 44) durch den Zusammenbau einer Hülse (29b) mit einem Käfig (29a, 39a, 49a) gebildet wird, **dadurch gekennzeichnet, dass** es, da der Käfig (29a, 39a, 49a) mit Flügeln (32) versehen ist, die folgenden Schritte enthält:
- den Schritt, ein in diesen Flügeln angeordnetes, biegsames Element (27, 37, 47) vorgespannt zu halten,
- den Schritt, die Patrone (24, 34, 44) in den Zylinder (25, 45) einzuführen und diese Patrone (24, 34, 44) in einer Betriebsstellung zu halten, und
- den Schritt, das biegsame Element (27, 37, 47) aus den Flügeln (32) zu lösen, um seine Ausdehnung zu erlauben, bis dieses biegsame Element (27, 37, 47) mit dem Zylinder (25, 45) in Kontakt kommt und so die Verschiebungen der Patrone (24, 34, 44) in diesem Zylinder (25, 45) blockiert.

2. Verfahren nach dem vorhergehenden Anspruch, **dadurch gekennzeichnet, dass** es den Schritt enthält, mindestens einen Anschlag, eine Rille (48) oder eine Aufnahme zu verwenden, die sich auf einer Wand des Zylinders (45) befindet, um mit dem biegsamen Element (47) nach dem Einführen der Patrone (44) in den Zylinder (45) in Kontakt zu kommen.

3. Verfahren nach einem der Ansprüche 1 oder 2, **dadurch gekennzeichnet, dass** es den Schritt enthält, das biegsame Elements (27, 37, 47) gleichzeitig mit dem Kontakt des biegsamen Elements (27, 37, 47) mit dem Zylinder (25, 45) mit dem Käfig (29a, 39a, 49a) der Patrone (24, 34, 44) in Kontakt zu halten.

4. Verfahren nach einem der Ansprüche 1 bis 3, **dadurch gekennzeichnet, dass** es, da die Patrone (24, 34, 44) eine Vorspannfeder enthält, den Schritt enthält, die vorgespannte Feder zu halten, während die Ausdehnung des biegsamen Elements (27, 37, 47) erfolgt.

5. Verfahren nach Anspruch 4, das den Schritt enthält, die vorgespannte Feder zu halten, indem ein erstes koaxiales Werkzeug (41), das mit der Patrone (44) in Kontakt kommt, und ein zweites, ebenfalls koaxiales Werkzeug (43) verwendet wird, um das biegsame Element (47) aus den Flügeln zu lösen.

6. Bremsvorrichtung (20), die eine in einem Zylinder (25) angeordnete Patrone (24) enthält, die einander gegenüberliegende Platten (28a, 28b) und Wälzkugeln (28c) aufweist, welche in Rampenaufnahmen gefangen sind, die einander gegenüberliegend in den Platten ausgespart sind, **dadurch gekennzeichnet, dass** die Patrone (24) einen mit Flügeln versehenen Käfig aufweist, dass die Patrone im Zylinder (25) mit Hilfe eines biegsamen Elements (27) blockiert wird, das in dem Zylinder gemäß einem Verfahren angeordnet wird, welches gemäß einem der vorhergehenden Ansprüche durchgeführt wird.

7. Patrone (24, 34, 44), die dazu bestimmt ist, in einen Zylinder eingebaut zu werden, um eine Bremsvorrichtung zu bilden, die einander gegenüberliegende Platten (28a, 28b) und Wälzkugeln (28c) aufweist, welche in Rampenaufnahmen gefangen sind, die einander gegenüberliegend in den Platten ausgespart sind, **dadurch gekennzeichnet, dass** sie einen mit Flügeln versehenen Käfig aufweist, dass die Patrone mit einem vorgespannten biegsamen Element (27, 37, 47) versehen ist, um ein Verfahren nach einem der Ansprüche 1 bis 5 durchzuführen.

8. Patrone nach Anspruch 7, **dadurch gekennzeichnet, dass** das biegsame Element (37) in den Flügeln (32) angeordnet ist.

9. Zylinder (25, 45), der eine Patrone (24, 44) aufweist, um eine Bremsvorrichtung zu bilden, die einander gegenüberliegende Platten (28a, 28b) und Wälzkugeln (28c) aufweist, welche in Rampenaufnahmen gefangen sind, die einander gegenüberliegend in den Platten ausgespart sind, **dadurch gekennzeichnet, dass** er mindestens einen Anschlag oder eine Rille (48) aufweist, die dazu bestimmt ist, ein Verfahren nach einem der Ansprüche 1 bis 6 durchzuführen.

10. Zylinder nach Anspruch 9, **dadurch gekennzeichnet, dass** er Einrichtungen enthält, um die Positionierung der Patrone in ihrer Aufnahme zu führen.
